# FASCICULE DE BREVET EUROPEEN

(11) **EP 1 766 214 B1**
(45) Date de publication et mention de la délivrance du brevet: **16.03.2011**
(21) Numéro de dépôt: 05781824.7
(22) Date de dépôt: 21.06.2005
(51) Int. Cl.: F02D 41/02, F02D 41/14

(54) **SYSTEME D'AIDE A LA REGENERATION DE MOYENS DE DEPOLLUTION POUR VEHICULE AUTOMOBILE**
SYSTEM ZUR UNTERSTÜTZUNG DER REGENERIERUNG VON ENTGIFTUNGSMITTELN FÜR EINEN KRAFTFAHRZEUGMOTOR
SYSTEM FOR ASSISTING THE REGENERATION OF DEPOLLUTION MEANS FOR A MOTOR VEHICLE ENGINE

(30) Priorité: 23.06.2004 FR 0406863
(43) Date de publication de la demande: 28.03.2007
(73) Titulaire: PEUGEOT CITROËN AUTOMOBILES S.A., 78140 Vélizy Villacoublay (FR)
(72) Inventeur: COLIGNON, Christophe, F-92300 LEVALLOIS PERRET (FR)
(74) Mandataire: Pinchon, Odile
(86) Numéro de dépôt international: PCT/FR2005/050472
(87) Numéro de publication internationale: WO 2006/005872

(56) Documents cités:
- EP-A- 1 041 262
- EP-A- 1 386 656
- EP-A- 1 405 999
- EP-B- 0 708 809
- WO-A1-01/51779
- WO-A1-02/75138
- FR-A- 2 774 421
- BUNTING A: "SPRINGING THE TRAP" mai 2000 (2000-05), AUTOMOTIVE ENGINEER, MECHANICAL ENGINEERING PUBL.LTD. BURY ST.EDMUNDS, GB, PAGE(S) 73-74 , XP000936087 ISSN: 0307-6490 le document en entier

## Description

La présente invention concerne un système d'aide à la régénération de moyens de dépollution intégrés dans une ligne d'échappement d'un moteur Diesel de véhicule automobile.

Plus particulièrement, l'invention se rapporte à un tel système dans lequel le moteur est associé à des moyens à rampe commune d'alimentation en carburant de cylindres de celui-ci, selon au moins une post-injection.

Une telle post-injection est, de façon classique, une injection de carburant après le point mort haut du cylindre considéré.

Ces moyens d'alimentation sont adaptés pour mettre en oeuvre, à isocouple, par modification de paramètres de contrôle de fonctionnement du moteur, différentes stratégies de régénération permettant d'obtenir des niveaux thermiques différents dans la ligne d'échappement.

Ainsi par exemple, des moyens d'alimentation mettant en oeuvre une première stratégie de régénération selon une stratégie dite de niveau 1 et une seconde stratégie de régénération selon une stratégie dite de niveau 2 et/ou une stratégie de niveau 2 surcalibré, ont déjà été proposés voir par exemple WO 01/51779 A1.

On sait en effet que pour assurer la régénération de moyens de dépollution tels qu'un filtre à particules, les suies piégées dans celui-ci sont brûlées grâce à la thermique fournie par le moteur et à l'exotherme réalisé par la conversion des HC et du CO sur des moyens formant catalyseur d'oxydation placés par exemple en amont du filtre à particules.

Cette combustion peut être assistée par un élément catalyseur mélangé aux suies, issu par exemple d'un additif d'aide à la régénération, mélangé au carburant d'alimentation du moteur ou bien par un catalyseur déposé directement sur les parois du filtre à particules (filtre à particules catalysé).

Plus les niveaux thermiques dans la ligne d'échappement en entrée du filtre à particules sont élevés, plus la durée de régénération du filtre est courte.

Or, en conditions de roulages critiques, comme par exemple en ville ou dans des embouteillages, les niveaux atteints à travers les stratégies d'aide à la régénération classiques du filtre à particules, peuvent se révéler insuffisants pour assurer la régénération correcte du filtre, ce qui peut se traduire par des régénérations très longues et donc très consommatrices de carburant, voire incomplètes.

Toute stratégie d'élévation de niveaux thermiques lors de ces roulages critiques permet alors d'assurer des régénérations complètes, de réduire la surconsommation due à cette régénération du filtre à particules, et surtout d'augmenter la marge de sécurité par rapport à la fissuration ou à la casse de ces filtres.

Le but de l'invention est de proposer une telle stratégie.

A cet effet, l'invention a pour objet un système d'aide à la régénération de moyens de dépollution intégrés dans une ligne d'échappement d'un moteur Diesel de véhicule automobile, dans lequel le moteur est associé à des moyens d'alimentation à rampe commune d'injection de carburant dans les cylindres de celui-ci, selon au moins une post-injection et adaptés pour mettre en oeuvre, à isocouple, par modification de paramètres de contrôle du fonctionnement du moteur, au moins deux stratégies de régénération dont une première stratégie de régénération comportant des stratégies dites de niveau 1 et de niveau 2 et une seconde stratégie de régénération comportant des stratégies de niveau 1 et une séquence alternant des stratégies de niveau 2 et une stratégie de niveau 2 surcalibré, permettant d'obtenir des niveaux thermiques différents dans la ligne d'échappement, caractérisé en ce qu'il comporte des moyens de détermination de la fréquence de régénération des moyens de dépollution et des moyens de comparaison de celui-ci à des valeurs de seuil prédéterminées, pour mettre en oeuvre la première stratégie de régénération pour les fréquences inférieures aux valeurs de seuil ou la seconde stratégie pour les fréquences supérieures aux valeurs de seuil.

Suivant d'autres caractéristiques :
- les moyens de dépollution comprennent un filtre à particules ;
- le filtre à particules est catalysé ;
- les moyens de dépollution comprennent un piège à NOx ;
- le carburant comporte un additif destiné à se déposer avec les particules auxquelles il est mélangé, sur les moyens de dépollution pour faciliter leur régénération ;
- les moyens de dépollution sont imprégnés avec une formulation SCR, assurant une fonction d'oxydation CO/HC ;
- le carburant comporte un additif formant piège à NOx ;
- le moteur est associé à un turbocompresseur ; et
- la fréquence de régénération des moyens de dépollution est déterminée à partir des cinq dernières tentatives de régénération de ceux-ci.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure d'un système d'aide selon l'invention ; et
- la Fig.2 illustre le fonctionnement de celui-ci.

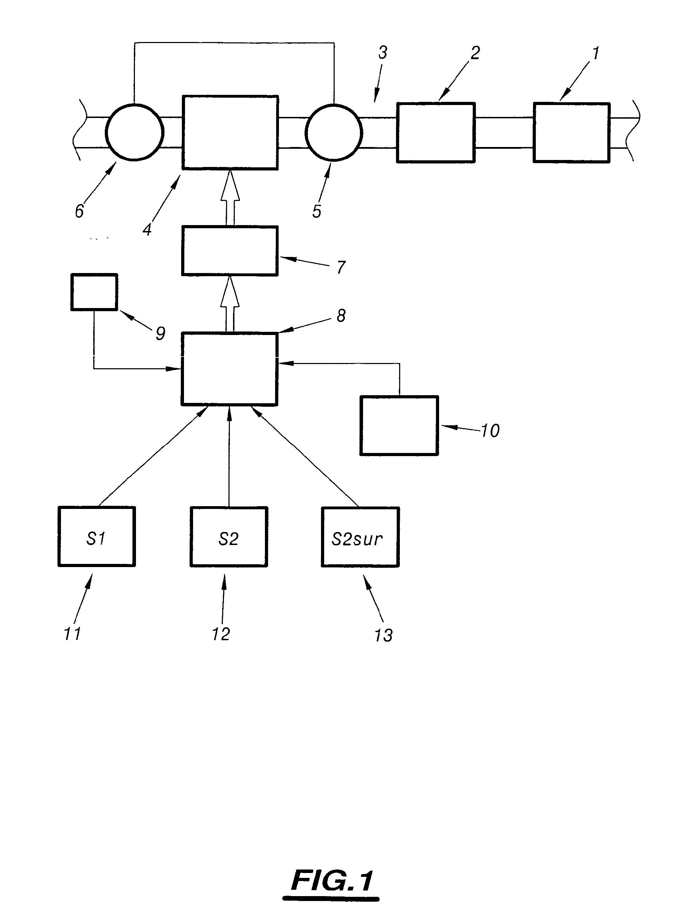

On a en effet illustré sur la figure 1, un système d'aide à la régénération de moyens de dépollution désignés par la référence générale 1, associé à des moyens formant catalyseur d'oxydation, désignés par la référence générale 2 et placés dans une ligne d'échappement 3 d'un moteur thermique tel qu'un moteur Diesel de véhicule automobile.

Ce moteur est désigné par la référence générale 4 et peut être associé par exemple à un turbocompresseur dont la portion de turbine 5 est associée à la ligne d'échappement et dont la portion de compresseur 6 est placée en amont du moteur.

Le moteur est associé à des moyens à rampe commune d'alimentation en carburant des cylindres de celui-ci, désignés par la référence générale 7, dont le fonctionnement est contrôlé par un superviseur 8.

Selon l'invention, ce système comporte également des moyens de détermination de la fréquence de régénération des moyens de dépollution et des moyens de comparaison de celle-ci à des valeurs de seuil prédéterminées, pour contrôler le fonctionnement du moteur.

Les moyens de comparaison formés par exemple par le superviseur 8, sont alors reliés à des moyens de détermination de cette fréquence, désignés par la référence générale 9, délivrant celle-ci au superviseur 8, de manière à permettre à celui-ci de la comparer à des valeurs de seuil telles que délivrées par des moyens de génération 10, comprenant tous moyens appropriés permettant d'établir ces valeurs de seuil.

La détermination de la fréquence de régénération des moyens de dépollution est en effet importante.

Cette fréquence est déterminée à partir de la distance moyenne parcourue, par exemple entre les cinq dernières régénérations, par calcul en prenant en compte les cinq dernières tentatives de régénération ou activations de la demande d'aide à la régénération ayant donné lieu à un bilan de régénération.

Ce calcul est basé sur le kilométrage au début des demandes d'aide à la régénération.

Pour éviter des régénérations trop fréquentes, le kilométrage entre chaque régénération pour les cinq régénérations est enregistré par exemple en mémoire de type E-EPROM.

A partir de ces cinq valeurs, il est alors possible de calculer une moyenne kilométrique de régénération pour déterminer cette fréquence de régénération.

Bien entendu, d'autres modes de réalisation peuvent être envisagés.

Ce nombre ainsi déterminé est ensuite comparé à des valeurs de seuil pour déterminer la stratégie optimale à appliquer.

En fait, le superviseur et les moyens à rampe commune d'alimentation en carburant sont adaptés pour piloter le moteur selon différentes stratégies de régénération permettant d'obtenir des niveaux thermiques différents dans la ligne d'échappement et en particulier une première stratégie de régénération comportant des stratégies de niveau 1, S1 telle que désignée par la référence générale 11 sur cette figure 1 et de niveau 2, S2, telle que désignée par la référence 12 sur cette figure et une seconde stratégie de régénération comportant des stratégies de niveau 1, S1 et une séquence alternant des stratégies de niveau 2, S2, et de niveau 2 surcalibré, S2 sur, telle que désignée par la référence générale 13 sur cette figure.

En fait, dans le système selon l'invention, et en fonction des résultats de la comparaison opérée par les moyens de comparaison de la fréquence aux valeurs de seuil prédéterminées, on met en oeuvre une stratégie de régénération selon un mode de fonctionnement en niveau 1 et en niveau 2 pour les fréquences inférieures aux valeurs de seuil prédéterminées (distance moyenne entre régénérations supérieure à une valeur de seuil) ou selon un mode de fonctionnement en niveau 1 associé à une séquence alternant des modes de fonctionnement en niveau 2 et en niveau 2 surcalibré, pour les fréquences supérieures aux valeurs de seuil prédéterminées (distance moyenne entre régénérations inférieure à la valeur de seuil).

Ceci permet alors de maximiser les chances de réussite de la régénération notamment en conditions de roulages critiques, comme par exemple en ville ou dans des embouteillages.

A titre d'exemple, on peut passer des critères suivants pour une calibration classique d'aide à la régénération d'un filtre à particules de niveau 2 :
- température maximale collecteur d'échappement =800°C
- exotherme catalyseur maximal = 150°C
- température sortie catalyseur maximale = 710°C
- température interne catalyseur maximale = 760°C
- teneur en oxygène minimale des gaz en sortie catalyseur = 3%
aux critères suivants pour une stratégie de niveau 2 surcalibré :
- température maximale collecteur d'échappement =830°C
- exotherme catalyseur maximal = 200°C
- température sortie catalyseur maximale = 730°C
- température interne catalyseur maximale = pas de valeur maximale
- teneur en oxygène minimale des gaz en sortie catalyseur = 2%;

Avec les résultats suivants :

| | |
|---|---|
| **Cycles EUDC** | - température en entrée du FAP de 600°C atteinte en 200 sec. au lieu de 600 sec. avec l'aide à la RG standard |
| | - température en entrée du FAP de 650°C atteinte en 220 sec. alors que cette température n'est jamais atteinte avec l'aide à la RG standard |
| **Cycle Ville** | - température en entrée du FAP de 500°c atteinte en 100 sec. au lieu de 150 sec. avec l'aide à la RG standard |
| | - température en entrée FAP de 550°C atteinte en 105 sec. au lieu de 300 sec. avec l'aide à la RG standard |
| | - température en entrée FAP de 600°C atteinte en 150 sec. alors que cette température n'est jamais atteinte avec l'aide à la RG standard |

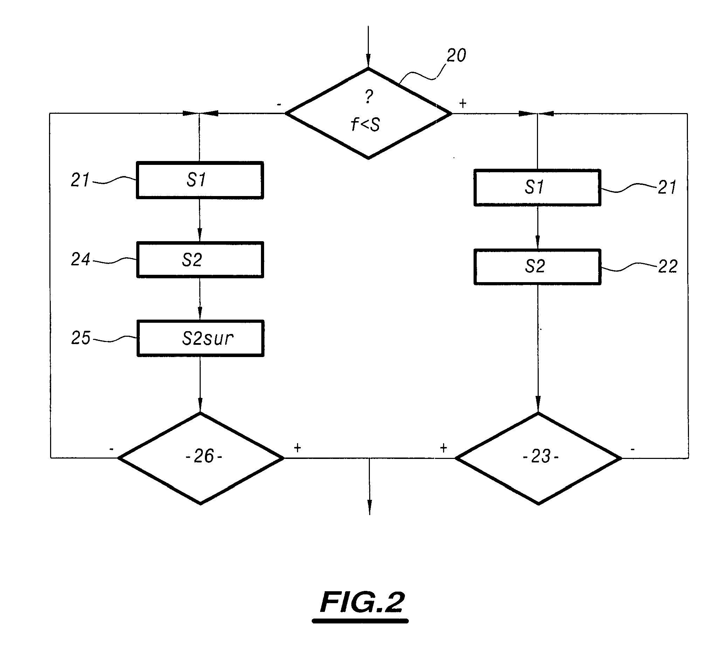

On a illustré sur la figure 2, un organigramme illustrant le fonctionnement de ce système d'aide à la régénération.

Celui-ci débute par une phase de détermination de la fréquence de régénération des moyens de dépollution à partir des différentes informations mentionnées précédemment.

Cette fréquence f est ensuite comparée par le superviseur, en 20, à des valeurs de seuil.

Si la fréquence est inférieure aux valeurs de seuil, la stratégie de régénération met en oeuvre une stratégie dite de niveau 1, en 21 associée à une stratégie de niveau 2, en 22, jusqu'à la fin de la régénération telle que déterminée en 23.

Par contre, si la fréquence est supérieure aux valeurs de seuil, le superviseur met en oeuvre une seconde stratégie de régénération comportant une stratégie de niveau 1, en 21, associée à une séquence alternant des stratégies de niveau 2 et de niveau 2 surcalibré, telles que désignées par 24 et 25 sur cette figure, jusqu'à la fin de la régénération telle que détectée en 26.

Il va de soi bien entendu que différents modes de réalisation de ce système peuvent être envisagés et que les moyens de dépollution peuvent comporter un filtre à particules, comme par exemple un filtre à particules catalysé ou encore un piège à NOx.

De plus, le carburant peut également comporter un additif destiné à se déposer avec les particules auquel il est mélangé, sur les moyens de dépollution pour faciliter leur régénération.

Ces moyens de dépollution peuvent également être imprégnés avec une formulation SCR assurant une fonction d'oxydation CO/HC de façon classique.

D'autres moyens formant catalyseur d'oxydation peuvent être envisagés et les moyens de dépollution et les moyens formant catalyseur d'oxydation peuvent être intégrés dans un seul et même élément, notamment sur le même substrat.

A titre d'exemple, un filtre à particules intégrant la fonction d'oxydation peut être envisagé.

De même, un piège à NOx intégrant une telle fonction d'oxydation peut également être envisagé, que celui-ci soit additivé ou non.

Cette fonction d'oxydation et/ou de piège à NOx peut être remplie, par exemple par un additif mélangé au carburant.

## Revendications

1. Système d'aide à la régénération de moyens de dépollution (1) intégrés dans une ligne d'échappement (3) d'un moteur Diesel (4) de véhicule automobile, dans lequel le moteur (4) est associé à des moyens d'alimentation (7) à rampe commune d'injection de carburant dans les cylindres de celui-ci, selon au moins une post-injection et adaptés pour mettre en oeuvre, à isocouple, par modification de paramètres de contrôle du fonctionnement du moteur, au moins deux stratégies de régénération **caractérisé en ce qu'**une première stratégie de régénération comportent des stratégies dites de niveau 1 et de niveau 2 et une seconde stratégie de régénération comportent des stratégies de niveau 1 et une séquence alternant des stratégies de niveau 2 et de niveau 2 surcalibré, lesdits niveaux 2 et 2 surcalibré permettant d'obtenir des niveaux thermiques différents dans la ligne d'échappement, ledit niveau 2 surcalibré permettant d'obtenir un niveaux thermique supérieur à celui du niveau 2, et **en ce qu'**il comporte des moyens (8) de détermination de la fréquence de régénération des moyens de dépollution et des moyens (8) de comparaison de celle-ci à des valeurs de seuil prédéterminées, pour mettre en oeuvre la première stratégie de régénération pour les fréquences inférieures aux valeurs de seuil ou la seconde stratégie pour les fréquences supérieures aux valeurs de seuil.

2. Système selon la revendication 1, **caractérisé en ce que** les moyens de dépollution comprennent un filtres particules.

3. Système selon la revendication 2, **caractérisé en ce que** le filtre à particules est catalysé.

4. Système selon l'une quelconque des revendications précédentes, **caractérisé en ce que** les moyens de dépollution comprennent un piège à NOx.

5. Système selon l'une quelconque des revendications précédentes, **caractérisé en ce que** le carburant comporte un additif destiné à se déposer avec les particules auxquelles il est mélangé, sur les moyens de dépollution pour faciliter leur régénération.

6. Système selon l'une quelconque des revendications précédentes, **caractérisé en ce que** les moyens de dépollution sont imprégnés avec une formulation SCR, assurant une fonction d'oxydation CO/HC.

7. Système selon l'une quelconque des revendications précédentes, **caractérisé en ce que** le carburant comporte un additif formant piège à NOx.

8. Système selon l'une quelconque des revendications précédentes, **caractérisé en ce que** le moteur (4) est associé à un turbocompresseur (5,6).

9. Système selon l'une quelconque des revendications précédentes, **caractérisé en ce que** la fréquence de régénération des moyens de dépollution est déterminée à partir des cinq dernières tentatives de régénération de ceux-ci.

## Claims

1. System for assisting the regeneration of depollution means (1) integrated in an exhaust line (3) of a diesel engine (4) of a motor vehicle, in which the engine (4) is associated with common rail supply means (7) for the injection of fuel in the cylinders thereof, according to at least one post-injection and adapted to implement, in isocouple, through modification of parameters for controlling the functioning of the engine, at least two regeneration strategies, **characterized in that** a first regeneration strategy comprises strategies designated as level 1 and level 2, and a second regeneration strategy comprises level 1 strategies and a sequence alternating level 2 and over-calibrated level 2 strategies, the said level 2 and over-calibrated level 2 allowing different thermal levels to be obtained in the exhaust line, the said over-calibrated level 2 allowing a thermal level to be obtained which is higher than that of level 2, and **in that** it comprises means (8) for determining the regeneration frequency of the depollution means and means (8) for comparison of the latter with predetermined threshold values, to implement the first regeneration strategy for the frequencies lower than the threshold values or the second strategy for the frequencies higher than the threshold values.

2. System according to Claim 1, **characterized in that** the depollution means comprise a particle filter.

3. System according to Claim 2, **characterized in that** the particle filter is catalyzed.

4. System according to any one of the preceding claims, **characterized in that** the depollution means comprise an NOx trap.

5. System according to any one of the preceding claims, **characterized in that** the fuel comprises an additive intended to be deposited, with the particles with which it is mixed, on the depollution means to facilitate their regeneration.

6. System according to any one of the preceding claims, **characterized in that** the depollution means are impregnated with an SCR formulation, ensuring a CO/HC oxidation function.

7. System according to any one of the preceding claims, **characterized in that** the fuel comprises an additive forming an NOx trap.

8. System according to any one of the preceding claims, **characterized in that** the engine (4) is associated with a turbocompressor (5, 6).

9. System according to any one of the preceding claims, **characterized in that** the regeneration frequency of the depollution means is determined from the five last regeneration attempts thereof.

## Patentansprüche

1. System zur Unterstützung der Regenerierung von Reinigungsmitteln (1), die in eine Auspuffanlage (3) eines Dieselmotors (4) eines Kraftfahrzeugs eingebaut sind, wobei der Motor (4) mit Zuführmitteln (7) mit gemeinsamem Rail zum Einspritzen von Kraftstoff in dessen Zylinder verbunden ist, gemäß mindest einer Nachspritzung und die mit Isomoment durch Änderung von Steuerparametern des Funktionierens des Motors mindestens zwei Regenerierungsstrategien umsetzen können, **dadurch gekennzeichnet, dass** eine erste Regenerierungsstrategie so genannte Strategien des Niveaus 1 und des Niveaus 2 aufweist, und eine zweite Regenerierungsstrategie Strategien des Niveaus 1 aufweist und eine Abfolge, die Strategien des Niveaus 2 und des überkalibrierten Niveaus 2 abwechselt, wobei es die Niveaus 2 und 2 überkalibriert erlauben, unterschiedliche thermische Niveaus in der Auspuffanlage zu erzielen, wobei es das sogenannte überkalibrierte Niveau 2 erlaubt, ein thermisches Niveau zu erzielen, das höher ist als das des Niveaus 2, und dass es Mittel (8) zum Bestimmen der Regenerierungsfrequenz der Reinigungsmittel aufweist sowie Mittel (8) zum Vergleichen dieser mit vorbestimmten Schwellenwerten, um die erste Regenerierungsstrategie für Frequenzen umzusetzen, die kleiner sind als die Schwellenwerte, oder die zweite Strategie für die Frequenzen, die größer sind als die Schwellenwerte.

2. System nach Anspruch 1, **dadurch gekennzeichnet, dass** die Reinigungsmittel ein Partikelfilter aufweisen.

3. System nach Anspruch 2, **dadurch gekennzeichnet, dass** das Partikelfilter katalysiert wird.

4. System nach einem der vorhergehenden Ansprüche, **dadurch gekennzeichnet, dass** die Reinigungsmittel eine NOx-Falle aufweisen.

5. System nach einem der vorhergehenden Ansprüche, **dadurch gekennzeichnet, dass** der Kraftstoff einen Zusatz aufweist, der dazu bestimmt ist, sich mit den Partikeln, mit welchen er vermischt ist, auf den Reinigungsmitteln abzulagern, um ihre Regenerierung zu erleichtern.

6. System nach einem der vorhergehenden Ansprüche, **dadurch gekennzeichnet, dass** die Reinigungsmittel mit einer SCR-Mischung getränkt sind, die eine CO/HC-Oxidationsfunktion sicherstellt.

7. System nach einem der vorhergehenden Ansprüche, **dadurch gekennzeichnet, dass** der Kraftstoff einen Zusatz, der eine NOx-Falle bildet, enthält.

8. System nach einem der vorhergehenden Ansprüche, **dadurch gekennzeichnet, dass** der Motor (4) mit einem Turbolader (5, 6) verbunden ist.

9. System nach einem der vorhergehenden Ansprüche, **dadurch gekennzeichnet, dass** die Regenerierungsfrequenz der Reinigungsmittel ausgehend von ihren fünf letzten Regenerierungsversuchen bestimmt wird.
